# EUROPEAN PATENT APPLICATION

(11) **EP 2 141 605 A1**
(43) Date of publication of application: **06.01.2010**
(21) Application number: 08305367.8
(22) Date of filing: 01.07.2008
(51) Int. Cl.: G06F 13/28

(54) **Method and device to perform direct memory access**

(71) Applicant: Thomson Licensing, 92100 Boulogne-Billancourt (FR)
(72) Inventor: Qu, Dongsheng, 100097, Beijing (CN); Tang, Rui, 100096,Beijing (CN); Cao, Xuelin, 100096, Beijing (CN)
(74) Representative: Ruellan-Lemonnier, Brigitte

(57) **Abstract**

A method for transmitting data from a first device to a second device is provided. The method comprises steps of adding at least one NULL packet to the data in the first device to meet the alignment requirement of the second device and packing the data and the at least one NULL packet into a new packet; and transferring the new packet from the first device to the second device. And an apparatus for using the method is provided too.

## Description

### FIELD OF THE INVENTION

This invention relates to a method and device to perform direct memory access.

### BACKGROUND OF THE INVENTION

In a Set Top Box of normal IPTV system, LINUX operating system sometimes is used, where data transfer is in CPU mode. The memory in Linux operating system can be divided into two regions: kernel space and user space. Kernel space is where the kernel (i.e., the core of the operating system) executes and provides its services. User space is a set of memory locations in which user processes (i.e., everything other than the kernel) run.

Kernel space can be accessed by user processes only through the use of system calls. System calls are requests in a Unix-like operating system by an active process for a service performed by the kernel, such as input/output (I/O) or process creation. During data transfer from LINUX kernel space to user space, then from user space to kernel space again, there are too many system-calls and context switches, which cause too much CPU consumption. So system performance is not very good in this condition. But for some reason, most of IPTV applications are using this solution.

Direct Memory Access (DMA) is an effective method that allows data to be sent directly from a memory location or region to another device or memory.When DMA is used, the CPU is freed from involvement with the data transfer, thus speeding up overall computer operation. DMA is essential to high performance embedded systems.

NetFilter hook is a very useful utility in LINUX kernel, it provides an application to "steal" IP packet from different levels of LINUX IP stack, so that the application can send Transport Stream (TS) data (UPD payload) to data consumer from kernel space directly. It seems that DMA technology can be used for IPTV.

But for most of hardware platforms , such as STi7100 and STi7109 (developed by STMicroelectronics company), their DMA channels have some limitations and special usage policies, such as aligning demand of source and destination base address, aligning demand of transferring length and supporting chained DMA or not. In this case, let's suppose that the hardware platform is STi7109. In terms of its architecture, its FDMA (a kind of DMA) device requires that source base address must be aligned with 4 bytes and transferring length must be aligned with 32 bytes.

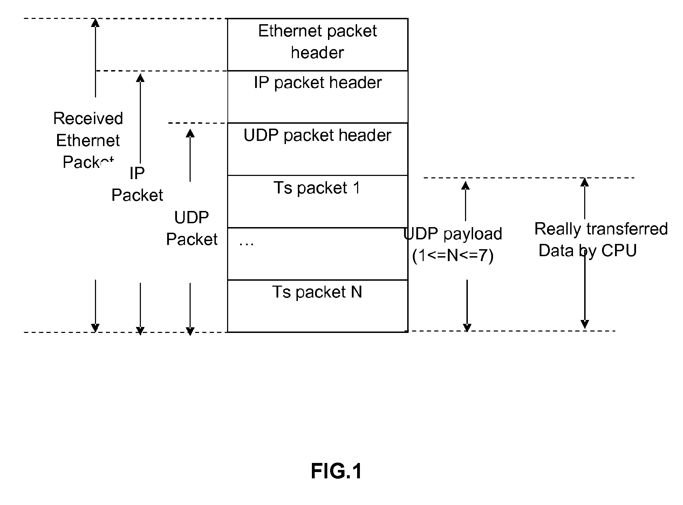

However, it's very clear that the transferring source in IPTV system is a list of UDP payloads. Please see Fig.1, which shows a traditional packing method for packing TS packets into a UDP packet. In IPTV system based on UDP protocol (TS over UDP), TS data will be packetized into UDP packets by a TS packing unit. The length of a TS packet is 188 bytes. For Ethernet, MTU (Maximum Transmission Unit) in Data-link layer is 1500 bytes. That means an IP packet whose length is more than MTU must be sliced by MTU. To avoid TS fragment caused by slicing IP packets, commonly, IPTV frontend system packs TS data into a UDP with 1472 bytes limited (Payload length = MTU - IP head - UDP head), wherein IP header normally occupies 20bytes and UDP header is 8 bytes. When this point is considered, one UDP packet only packs 1-7 TS packets. Thus FDMA can't transfer UDP payload because transferring length can never be aligned with 32 bytes. So normally, data transfer with CPU mode has to be used to deal with the unaligned bytes. That means the optimum performance can not be achieved.

### SUMMARY OF THE INVENTION

In a first aspect, a method for transmitting data from a first device to a second device is provided. The method comprises steps of adding at least one NULL packet to the data in the first device to meet the alignment requirement of the second device and packing the data and the at least one NULL packet into a new packet; and transferring the new packet from the first device to the second device.

Further, the data to be transmitted from the first device to the second device is audio and/or video transport stream.

In an example, the new packet packetized with the data and the at least one NULL packet is a UDP packet.

In addition, there is an identifier in the at least one NULL packet to label it.

In the first aspect, transferring the new packet from the first device to the second device is using direct memory access method.

In a second aspect, an apparatus for transmitting data from a first device to a second device is disclosed. The apparatus includes a processor for adding at least one NULL packet to the data in the first device to meet the alignment requirement of the second device and packing the data and the at least one NULL packet into a new packet; and a module for transferring the new packet from the first device to the second device.

In the apparatus, the data is audio and/or video transport stream.

Further in the apparatus, the new packet is a UDP packet.

In addition, there is at least one identifier in the at least one NULL packet to label it.

In the apparatus, there is a direct memory access module for transferring the new packet from the first device to the second device by using direct memory access method.

### BRIEF DESCRIPTION OF THE DRAWINGS

FIG.1 shows a traditional packing method for packing TS packets into a UDP packet;
FIG.2 is a diagram showing an exemplary STB system architecture using the present principle;
FIG.3 shows an exemplary packing method for packing TS packets into a UDP packet according to the present principle; and
FIG.4 shows an exemplary packing method for packing TS packets into multiple UDP packets according to the present principle.

### DETAILED DESCRIPTION OF THE INVENTION

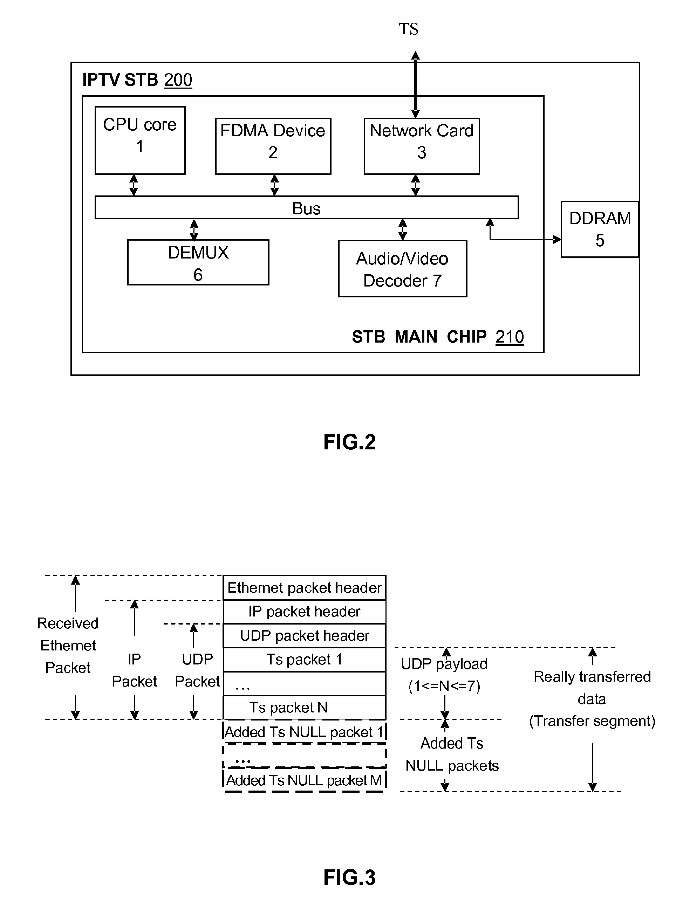

Please see Fig.2, which is a diagram showing an exemplary STB system architecture using the present principle.

The STB 200 includes a CPU Core 1, which can be a processor, a FDMA device 2 used to perform the FDMA method, a Network Card 3 which is used to receive Transport Stream (TS) from an IP server, a DDRAM 5 which is used to store TS data received from the Network Card 3, a DEMUX (De-multiplexer) 6 which is used to de-multiplex the multiplexed TS inputs to select specified video or audio contents, and an Audio/Video Decoder 7 which is used to decode the de-multiplexed audio/video data.

The detailed process is introduced hereafter by referring Fig.2 and Fig.3. Firstly, the Video/Audio UDP packets are received by the STB via a Network Card 3. Then the received Video/Audio UDP packets are sent to the memory DDRAM 5 by the FDMA Device 2 using Direct Memory Access (DMA) method and stored in pre-assigned area of DDRAM 5. Specially, at DDRAM 5, NULL packets are appended to the received UDP TS packets to re-organize the packets by CPU Core 1, as shown in Fig.3.

Take 32 bytes alignment requirement as an example. Since at most 7 TS packets can be packed with each TS packet length being 188 bytes in IPTV system, one NULL packet is appended to the end of the UDP packet by CPU Core 1. Thus the alignment requirement can be met, because (7+1) X188=1504 bytes which can be divided by 32. In addition, other number of NULL packets can be added, for example when 5 TS packets are packetized, 3 NULL packets can be added to make the payload be (5+3) X188=1504 bytes, which can be divided by 32 too. By using this method, the DMA Device 2 can transfer UDP payload by using DMA method.

According to DVB standard, for example, ISO/IEC 13818-1, every TS packet has a 13-bit PID (Packet Identifier) to identify the content of its payload, and PID 0x1FFF is reserved for NULL packet. DVB terminal system like STB can recognize the TS packets by checking the PID of TS. When the NULL packets are appended, PID 0x1FFF is used to label them.

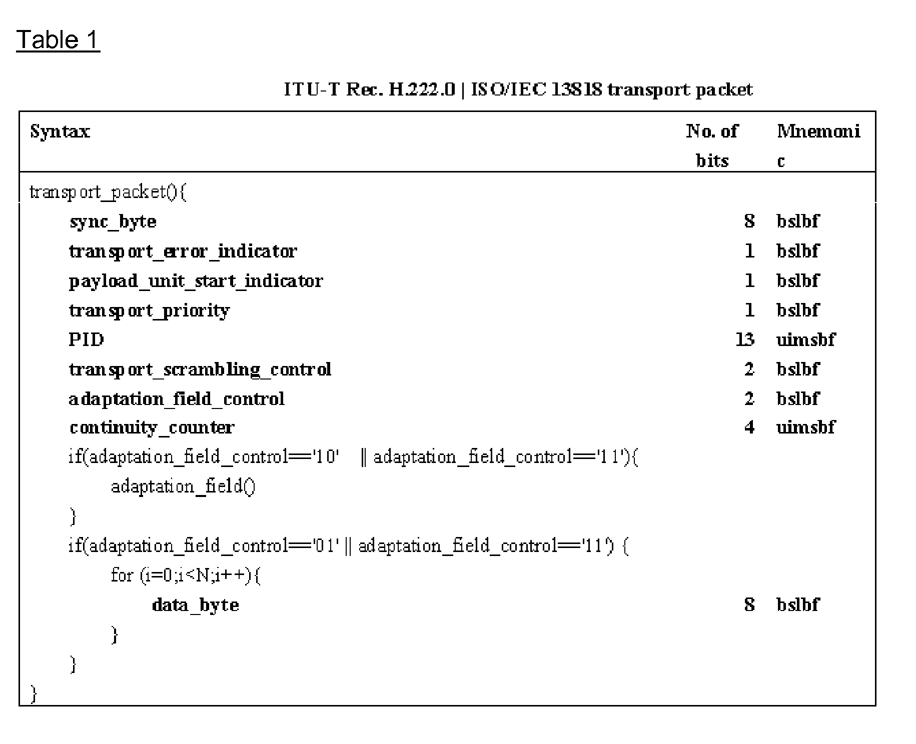

In Table 1, there are four bytes behind of the payload of the Video/Audio and at the beginning of the NULL packet set as 0x47, 0xFF , 0xFF and 0x10 respectively, wherein "0x47" is assigned to Sync_byte to show the packet is a TS packet,"0xFF" is a stuffed byte, and "0x10" is assigned to "adaption_filed_control" according to the standard when it is a NULL packet.

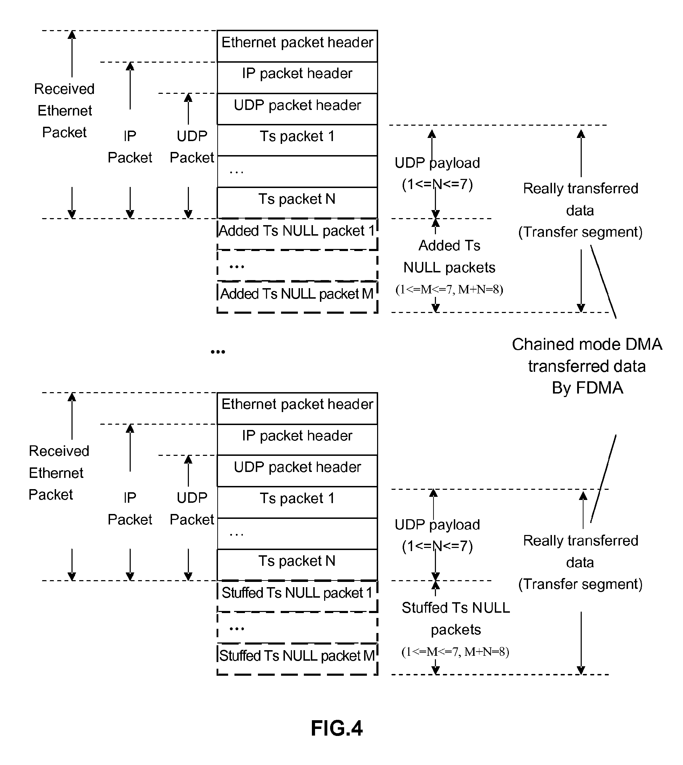

This re-organization process can be done any time just before the data is sent to DEMUX device. Then chained mode FDMA can be used as shown in Fig.4. This is because normal mode FDMA transfer can only work when the source transferred is fixed or linearly increased/decreased address, and destination also is fixed or linearly increased/decreased address. In this case, the source of transfer is a scattered memory region. So chained mode FDMA (Gather mode) is used by the FDMA Module 2 to transfer the re-organized TS packets to DEMUX 6. Please be noted that it's very important that the transferred length must be the sum of valid TS packets and stuffed NULL packets.

Then at DEMUX 6, the NULL packets are recognized via their PIDs and removed. Afterward, only the valid TS data are sent to the Audio/Video Decoder 7 for decoding.

The data transmissions in the STB 200 are via Bus and are controlled by the CPU Core 1, especially the NULL packets adding.

While this invention has been described by embodiments here, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method for transmitting data from a first device to a second device, **characterized in that** it comprises steps of
adding at least one NULL packet to the data in the first device to meet the alignment requirement of the second device and packing the data and the at least one NULL packet into a new packet; and
transferring the new packet from the first device to the second device.

2. The method according to claim 1, wherein transferring the new packet from the first device to the second device is using direct memory access method.

3. The method according to claim 2, wherein there are at least one identifier in the at least one NULL packet to label it.

4. The method according to claim 3, wherein the data is audio and/or video transport stream.

5. The method according to claim 4, wherein the new packet is a UDP packet.

6. An apparatus (200) for transmitting data from a first device to a second device, **characterized in that** the apparatus includes
a processor (1) for adding at least one NULL packet to the data in the first device to meet the alignment requirement of the second device and packing the data and the at least one NULL packet into a new packet; and
a module (2) for transferring the new packet from the first device to the second device.

7. The apparatus (200) according to claim 6, wherein the module (2) is a direct memory access module for transferring the new packet from the first device to the second device by using direct memory access method.

8. The apparatus (200) according to claim 7, wherein there is at least one identifier in the at least one NULL packet to label it.

9. The apparatus (200) according to claim 8, wherein the data is audio and/or video transport stream.

10. The apparatus (200) according to claim 9, wherein the new packet is a UDP packet.
